# EUROPEAN PATENT SPECIFICATION

(11) **EP 3 731 048 B1**
(45) Date of publication and mention of the grant of the patent: **21.09.2022**
(21) Application number: 19000201.4
(22) Date of filing: 26.04.2019
(51) Int. Cl.: G05B 19/418, H04W 76/14

(54) **A METHOD FOR COOPERATIVELY CARRYING A WORK PIECE**
VERFAHREN ZUM KOOPERATIVEN TRAGEN EINES WERKSTÜCKS
PROCÉDÉ POUR PORTER UNE PIÈCE DE MANIÈRE COOPÉRATIVE

(43) Date of publication of application: 28.10.2020
(73) Proprietor: Siemens Aktiengesellschaft, 80333 München (DE)
(72) Inventor: BAHR, Michael, 81827 München (DE); RICHTER, Siegfried, 91207 Lauf (DE)

(56) References cited:
- US-A1- 2016 272 135
- US-A1- 2019 039 826

## Description

### TECHNICAL FIELD

The disclosed embodiments generally relate to material handling robots and more particularly to a system of mobile material handling robots capable of providing synchronized motions while maintaining a desired motion to a work piece.

### BACKGROUND

In industrial environments of the future, large or heavy work pieces are carried from one place to another by a plurality of mobile material handling robots, particularly automated guided vehicles. Such mobile material handling robots need to cooperate with each other in order to smoothly and safely transport large and/or heavy work pieces.

A coordination of the plurality of mobile material handling robots is traditionally achieved by a central controller for controlling the movements of each mobile material handling robots in a coordinated way. To this end, control commands and control feedback between each mobile material handling robot control are exchanged with the central controller by a wireless data exchange.

Autonomously and cooperatively moving transporting robots are known in the art. US2019039826A1 discloses a method for cooperatively transporting an intermodal container by a plurality of robots utilizing swarm intelligence for autonomously locating, lifting, supporting, and moving via robots working in conjunction. The robots communicate directly with each other via a mesh system.

US2016272135A1 discloses a remote control system for a vehicle. The remote control system comprises a user terminal configured to transmit an image of an operating object of the vehicle to a terminal, the terminal configured to display an image transmitted from the user terminal and to transmit a control signal which controls an operation of the vehicle in accordance with an operating command entered on the terminal.

An industrial environment, however, is harsh for wireless communications compared to an office environment. Industrial environments are dominated by various metal objects, such as production machines, storage racks, materials and vehicles.

Still further, balancing motion and forces imposed to the workpiece by the plurality of mobile material handling robots requires a high data rate for exchanging control commands and control feedback between each mobile material handling robot and the central controller.

One major drawback of a central controller is that an achievable wireless data exchange with the plurality of robots is not sufficient for controlling each mobile material handling robot in a way that the work piece is even safely balanced.

Accordingly, there is a need in the art for an alternative control for cooperatively carrying a work piece by a plurality of mobile material handling robots.

### SUMMARY

Embodiments for cooperatively carrying a work piece as described herein generally involve a direct wireless communication amongst a plurality of mobile material handling robots cooperatively carrying a work piece.

A method for cooperatively carrying a work piece according to claim 1 is disclosed.

### DESCRIPTION OF THE DRAWING

The objects as well as further advantages of the present embodiments will become more apparent and readily appreciated from the following description of the preferred embodiments, taken in conjunction with the accompanying drawing in which:
- FIG. 1: shows a schematic representation of a plurality of mobile material handling robots cooperatively carrying a work piece;
- FIG. 2: shows a schematic representation of a communication amongst the plurality of mobile material handling robots in a wireless network operated by a base station;
- FIG. 3: shows a schematic representation of a communication amongst the plurality of mobile material handling robots in a wireless network with a resource coordination amongst two or more base stations; and;
- FIG. 4: shows a schematic representation of a communication amongst the plurality of mobile material handling robots in different wireless networks wherein a resource coordination is preparing a handover of one wireless network to another wireless network.

Like reference signs in the drawing generally represent like parts of exemplary embodiments of the invention.

### DETAILED DESCRIPTION

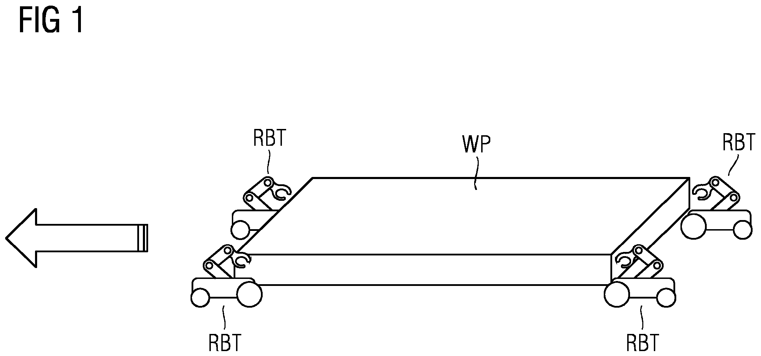

FIG. 1 shows four mobile material handling robots RBT gathered around a work piece WP which is to be moved in a direction symbolized by an arrow pointing to the left.

Each of the material handling robots RBT moving within an environment is equipped with a - not shown - user endpoint for wireless communication. The level of autonomy for the movement of a material handling robots RBT may comprise autonomous or semi-autonomous movement. The autonomous or semi-autonomous movement may comprise an assisted autonomy of material handling robots RBT in various grades ranging from fully autonomous material handling robots RBT without any interference by a human operator down to vehicles with human assisting capabilities.

The environment, in which the material handling robots RBT are operated, may comprise both, indoor and outdoor environments, including environments such as industrial environments, office environments, hospital environments, residential building environments or public outdoor environments such as trade fair sites, construction sites, public transport sites and or coastal regions such as offshore sites. The material handling robots RBT moving within the environment may include vehicles - preferably automated guided vehicles or AGV - or watercraft such as vessels or aerial vehicles such unpiloted aircraft, also referred to as unmanned aerial vehicles or UAV.

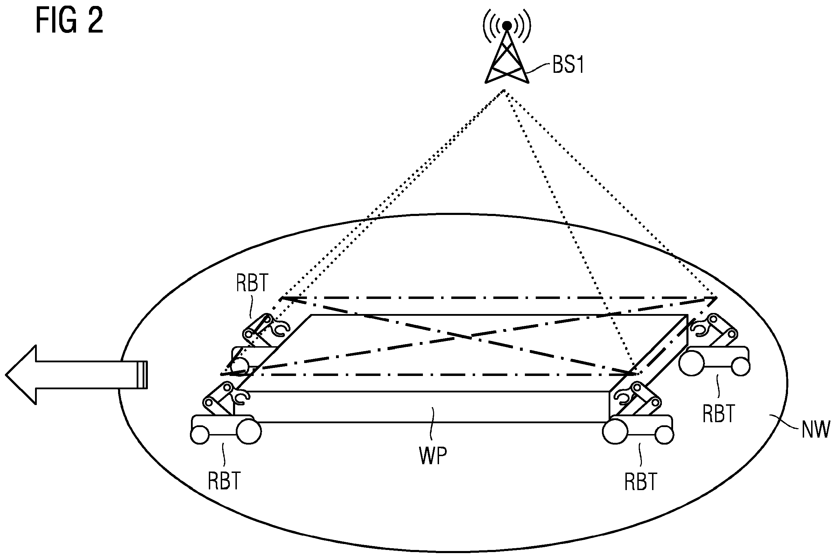

The work piece WP may comprise all kinds of industrial material such as production goods, raw goods, semi-finished goods, intermediate goods, finished goods, building components, construction units, machines, containers, containers and/or tools. In general, a work piece is understood as a heavy and/or large whose handling or transport is requiring a machine assistance. Turning now to FIG. 2 which shows a schematic representation of a communication amongst the plurality of mobile material handling robots RBT in a wireless network NW operated by at least one base station BS1.

The mobile material handling robots RBT are connected by a fifth generation or 5G wireless network. This 5G wireless network may be a non-public network, either stand-alone or integrated, e.g. as a private slice. The preferred communication technology is a 5G network, with 5G wireless communication interfaces supporting a high Quality of Service requirements, e.g. 5G new radio or 5G NR.

The user endpoints being integrated in each of the mobile material handling robots RBT for maintaining a wireless communication are also referred as UE or User Equipment in the terminology of this 5G communication. The base station BS1 also known is also referred to as gNodeB or gNB in the terminology of this 5G communication.

Prior to gathering the plurality of mobile material handling robots RBT around the work piece WP, a direct wireless communication is initiated amongst the user endpoints of each mobile material handling robots RBT. Alternatively, the direct wireless communication is initiated during or after the step of gathering the plurality of mobile material handling robots RBT around the work piece WP. The direct wireless communication between the robots RBT is symbolized as a respective dotdashed line in FIG. 2.

The advantageous provision of direct wireless communications between the robots RBT according to the embodiments is superior for serving the required high communication service availability and ultra-low latency needed for exchanging control command messages and control feedback messages amongst the user endpoints in order to balance the work piece. This requirement is commonly referred to as URLLC or Ultra Reliable Low Latency Communication.

According to an embodiment, only authorized user endpoints of the material handling robots RBT are allowed to participate in this collaborative direct wireless communication. An authorization control may include an examination, whether a respective user endpoint is for direct wireless communications.

Further on, a working clock domain is initiated amongst the user endpoints for establishing a periodic deterministic communication amongst the user endpoints. The exchange of control commands and control feedback is done with periodic deterministic communication and using time-sensitive networking.

According to an embodiment, one of the mobile material handling robots RBT assumes a controller functionality and controls the other collaborating mobile material handling robots RBT. This requires 1:N communication between the controlling mobile material handling robot RBT and the other controlled mobile material handling robots RBT.

A distributed control of the collaborating mobile material handling robots RBT is chosen. A distributed control requires N:N communication between all mobile material handling robots RBT.

The collaborating mobile material handling robots RBT carrying the work piece WP are communicating with direct wireless communication between each other.

A direct wireless communication or device-to-device (D2D) communication in an LTE network (Long Term Evolution) has already been proposed as a promising concept being part of an LTE-Advanced (LTE-A) framework, see the technical specification »Proximity-based services (ProSe); Stage 2«, 3GPP TS 23.303 V12.0.0 of the 3GPP (3rd Generation Partnership Project). Further on, LTE Sidelink defined by 3GPP in Release 12 may be applied to enable the direct wireless communication between two mobile material handling robot RBT without involving the base station BS1.

Direct wireless communication means that the wireless communication between two robots RBT - or more specifically: between the user endpoints of two robots RBT - is effected by one bidirectional wireless link directly between a user endpoint of a first robot RBT and a user endpoint of a second robot RBT, both acting as a device with respect to the device-to-device communication. Direct wireless communication particularly means that the wireless communication is not passing the base station BS1 as a communication node for diverting the communication traffic. Advantageously, this direct wireless communication requires only one wireless link between two mobile material handling robots RBT in contrast to the traditional wireless communication in a Radio Access Network or RAN, wherein two wireless links between two mobile material handling robots RBT and the base station BS1 are required.

According to an embodiment, the direct wireless communication is an assisted direct wireless communication or D2D communication. According to this embodiment, the base station BS1 coordinates resources of the direct wireless communication. The user endpoints of the material handling robots RBT need to be in range of the first base station BS1 or another base station for this assisted direct wireless communication. A resource coordination for the assisted direct wireless communication is effected by the base station BS1 using a Radio Access Network or RAN mode.

According to the invention, the direct wireless communication is a non-assisted direct wireless communication or D2D communication. According to this, the user endpoints of the material handling robots RBT are further responsible for the resource coordination in addition to processing their direct communication. The user endpoints of the material handling robots RBT can communicate independently from the availability of a base station.

The cooperating mobile material handling robots RBT belong to the same working clock domain in order to achieve the necessary time synchronization between each other for the periodic deterministic communication with ultra-low latency.

After - or during - initialization of the direct wireless communication amongst the user endpoints, the collaborating mobile material handling robots RBT set up a working clock synchronization domain amongst them. Protocols in this working clock domain provide for a time synchronization between the collaborating mobile material handling robots RBT. Time synchronization is an important pre-requisite for the efficient communication of control traffic and the successful execution of a control application aiming for carrying the work piece WP safely and smoothly to a desired destination.

Each mobile material handling robot RBT is a separate device that may have its own device-internal communication network apart from the wireless network NW. This device-internal communication network deploys time synchronization and is its own working clock synchronization domain, if the mobile material handling robot RBT is moving independently from any other mobile material handling robot RBT.

The communication pattern between the collaborating mobile material handling robots RBT is a cyclic communication or periodic-deterministic communication. The corresponding traffic flows for the control traffic grant for a high quality of service, especially low latency and high reliability.

On assembling the multiplicity of mobile material handling robots RBT for the purpose of cooperatively carrying the work piece WP, said different working clock domains of the mobile material handling robots RBT are advantageously be merged into the working clock domain for carrying the work piece, which can be a new working clock domain or the working clock domain of a specific mobile material handling robot RBT, for instance the mobile material handling robot RBT being the controlling robot.

The user endpoints of the mobile material handling robots RBT set up corresponding communication services through a suitable communication service interface. The communication services support the high quality of service and the communication pattern. The communication services are:
- between the user endpoint of the mobile material handling robot RBT that takes on the role of the controller and the user endpoints of the other collaborating mobile material handling robots RBT (1:N communication), and/or
- between the user endpoints of all collaborating mobile material handling robots RBT (N:N communication, every mobile material handling robot RBT can talk to every other collaborating mobile material handling robot RBT).

Eventually, the mobile material handling robots RBT are carrying the work piece WP in a coordinated way. The robots RBT exchange status information, control feedback, and control commands for their drives and movements with each other. This information is exchanged via multicast communication from the source robot RBT to all other collaborating robots RBT. The collaborating robots RBT communicate directly with each other over the wireless communication interfaces of their user endpoints.

In cases where the work piece WP is extremely large, a direct wireless communication may fail between every pair of collaborating robots RBT due to the limited radio range of the wireless communication. According to an embodiment, a user endpoint belonging to an intermediate robot RBT - which is located between distant collaborating robots RBT - bidirectionally relays a data exchange - i.e. control command messages and control feedback messages - between distant collaborating robots RBT.

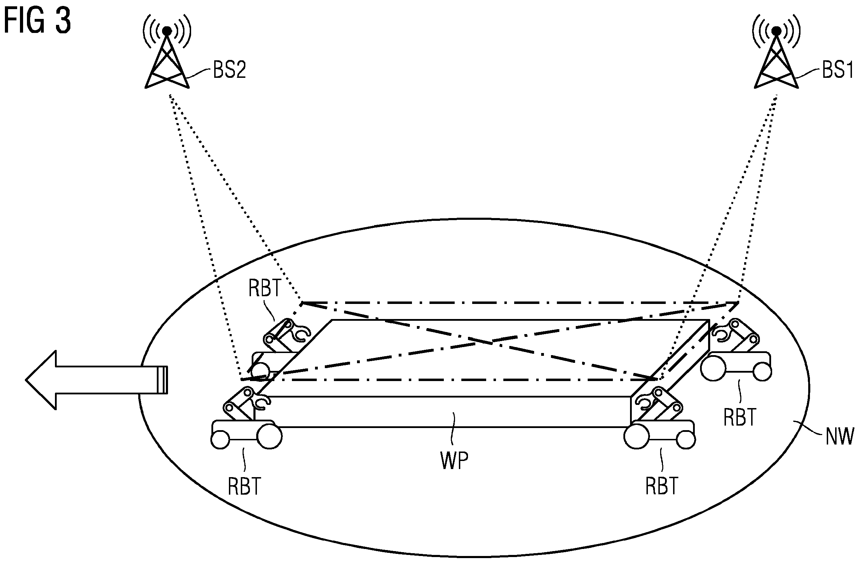

Referring now to FIG. 3 which shows a schematic representation of a communication amongst the plurality of mobile material handling robots in a wireless network with a resource coordination amongst a first base station BS1 and a second base station BS2. In an exemplary situation, where the mobile material handling robots RBT are carrying the work piece WP while moving along a factory floor, it may occur that the mobile material handling robots RBT move out of the range of a current coordinating base station BS1 into the range of one or more adjacent base stations, or, as shown in the drawing, into the range of an adjacent second base station BS2. The resource coordination for the direct wireless communication will be handed over between these base stations BS1,BS2.

Depending on the location and the density of the base stations BS1,BS2, the resource coordination of the user endpoints of the collaborating mobile material handling robots RBT may be operated by different base stations BS1,BS2 as shown in FIG. 3. The Radio Access Network interconnecting the base stations BS1,BS2 coordinates the resources direct wireless communication over different base stations BS1,BS2 with corresponding functionality.

Referring now to FIG. 3 which shows a communication amongst the plurality of mobile material handling robots RBT in different wireless networks wherein a resource coordination is preparing a handover of one wireless network NW1 to another wireless network NW2.

In an exemplary situation, where the mobile material handling robots RBT are carrying the work piece WP while moving along a large industrial outdoor site - for instance, if the destination of the work piece is the far end of a large open-air storage yard - it may occur that the mobile material handling robots RBT move out of the range of the first wireless network NW1, which may be a factory network NW1. The factory network NW1 may be a private or non-public 5G network which is restricted to a local area and which is not intended for public use. A second network NW2 - e.g. a public mobile 5G network also referred to as Public Land Mobile Network or PLMN - is assumed to be available in a vicinity of the factory 5G network NW1 and beyond.

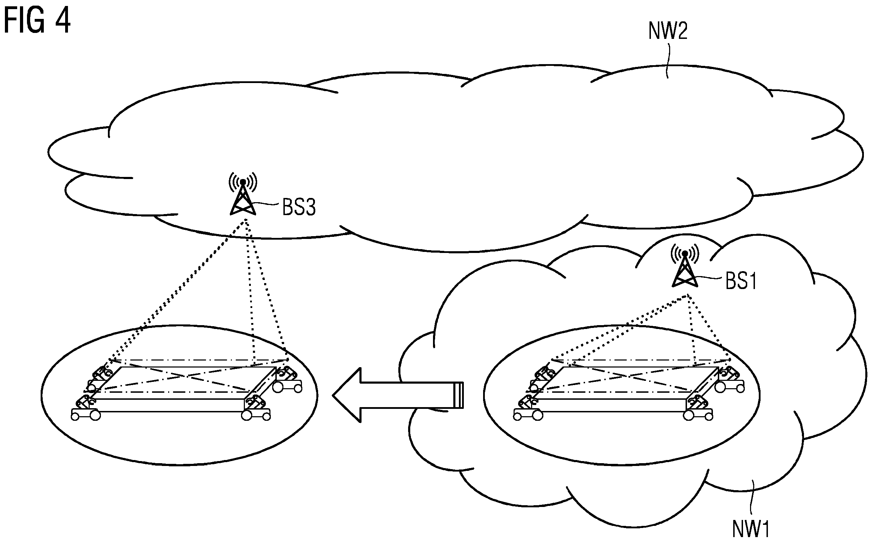

If the collaborating mobile material handling robots RBT leave the range of the factory network NW1 as exemplarily shown in FIG. 4, the public network NW2 takes over the resource coordination of the direct wireless communication of the mobile material handling robots RBT. According to an alternative embodiment, the collaborating mobile material handling robots RBT switch to a non-assisted direct wireless communication mode until they reach back to the coverage area of the factory network NW1.

After the work piece WP has been deployed at its destination, the direct wireless communication between the collaborating mobile material handling robots RBT along with its resources and the working clock domain including the collaborating mobile material handling robots RBT are released and torn down.

## Claims

1. A method for cooperatively carrying a work piece by a plurality of mobile material handling robots, wherein each of the plurality of mobile material handling robots comprises a user endpoint for wireless communication, each user endpoint being a fifth generation or 5G user equipment, the method including the steps of:
- gathering the plurality of mobile material handling robots around the workpiece, initiating a direct wireless communication amongst the user endpoints, the direct wireless communication initiated by a direct fifth generation or 5G communication and the direct wireless communication being a non-assisted direct wireless communication including a coordination of resources amongst user endpoints of the plurality of mobile material handling robots;
- setting up a working clock domain, effected by a time-sensitive network, amongst the user endpoints for establishing time synchronization and a periodic deterministic communication amongst the user endpoints; and;
- carrying the work piece by the plurality of mobile material handling robots while exchanging control command messages and control feedback messages amongst the user endpoints,
wherein a distributed control is effected by the mobile material handling robots.

2. The method according to claim 1, wherein the direct wireless communication is one or more of a D2D, a ProSe and a sidelink communication.

3. The method according to one of the aforementioned claims, wherein only authorized user endpoints are allowed to participate in the direct wireless communication.

4. The method according to one of the aforementioned claims, wherein one of the plurality of mobile material handling robots assumes a controller functionality and said one of the plurality of mobile material handling robots is controlling other collaborating mobile material handling robots.

5. The method according to one of the aforementioned claims, wherein the direct wireless communication amongst the user endpoints is an assisted direct wireless communication including a coordination of resources by a base station.

6. The method according to claim 5, wherein the coordination of resources is handed over from a first base station to a second base station.

7. The method according to claim 6, wherein the second base station is a base station of a public mobile network.

8. The method according claim 4, wherein the user endpoints of the mobile material handling robots set up communication services between said mobile material handling robot assuming a controller functionality and collaborating mobile material handling robots.

9. The method according claim 4, wherein the user endpoints of the mobile material handling robots set up communication services amongst the plurality of mobile material handling robots.

10. The method according to one of the aforementioned claims, wherein a user endpoint belonging to an intermediate mobile material handling robot bidirectionally relays control command messages and control feedback messages between distant mobile material handling robots.

## Patentansprüche

1. Verfahren zum gemeinsamen Tragen eines Werkstücks durch mehrere mobile Materialtransportroboter, wobei jeder der mehreren mobilen Materialtransportroboter einen Benutzerendpunkt für die Drahtloskommunikation umfasst, wobei es sich bei jedem Benutzerendpunkt um ein Benutzergerät der fünften Mobilfunkgeneration oder 5G-Benutzergerät handelt, wobei das Verfahren folgende Schritte umfasst:
- Versammeln der mehreren mobilen Materialtransportroboter um das Werkstück, Auslösen einer direkten Drahtloskommunikation zwischen den Benutzerendpunkten, wobei die direkte Drahtloskommunikation über eine direkte Kommunikation der fünften Mobilfunkgeneration oder 5G-Kommunikation ausgelöst wird und es sich bei der direkten Drahtloskommunikation um eine nicht unterstützte direkte Drahtloskommunikation handelt, zu der eine Koordination von Ressourcen unter Benutzerendpunkten der mehreren mobilen Materialtransportroboter gehört,
- Einrichten einer von einem zeitkritischen Netzwerk ausgeführten Arbeitstaktdomäne zwischen den Benutzerendpunkten zum Festlegen einer Zeitsynchronisation und einer regelmäßigen deterministischen Kommunikation zwischen den Benutzerendpunkten und
- Tragen des Werkstücks durch die mehreren mobilen Materialtransportroboter, während zwischen den Benutzerendpunkten Steuerbefehlsnachrichten und Steuerrückmeldungen ausgetauscht werden,
wobei von den mobilen Materialtransportrobotern eine verteilte Steuerung bewirkt wird.

2. Verfahren nach Anspruch 1, wobei es sich bei der direkten Drahtloskommunikation um eine D2D-, eine ProSe- und/oder eine Sidelink-Kommunikation handelt.

3. Verfahren nach einem der vorhergehenden Ansprüche, wobei nur autorisierte Benutzerendpunkte an der direkten Drahtloskommunikation teilnehmen dürfen.

4. Verfahren nach einem der vorhergehenden Ansprüche, wobei einer der mehreren mobilen Materialtransportroboter eine Controller-Funktion übernimmt und dann andere zusammenarbeitende mobile Materialtransportroboter steuert.

5. Verfahren nach einem der vorhergehenden Ansprüche, wobei es sich bei der direkten Drahtloskommunikation zwischen den Benutzerendpunkten um eine unterstützte direkte Drahtloskommunikation mit einer Koordination der Ressourcen über eine Basisstation handelt.

6. Verfahren nach Anspruch 5, wobei die Koordination von Ressourcen von einer ersten Basisstation an eine zweite Basisstation übergeben wird.

7. Verfahren nach Anspruch 6, wobei es sich bei der zweiten Basisstation um eine Basisstation eines öffentlichen Mobilfunknetzes handelt.

8. Verfahren nach Anspruch 4, wobei die Benutzerendpunkte der mobilen Materialtransportroboter Kommunikationsdienste zwischen dem eine Controller-Funktion übernehmenden mobilen Materialtransportroboter und zusammenarbeitenden mobilen Materialtransportrobotern einrichten.

9. Verfahren nach Anspruch 4, wobei die Benutzerendpunkte der mobilen Materialtransportroboter Kommunikationsdienste zwischen den mehreren mobilen Materialtransportrobotern einrichten.

10. Verfahren nach einem der vorhergehenden Ansprüche, wobei ein Benutzerendpunkt, der zu einem zwischengeschalteten mobilen Materialtransportroboter gehört, Steuerbefehlsnachrichten und Steuerrückmeldungen bidirektional zwischen entfernt gelegenen mobilen Materialtransportrobotern weiterleitet.

## Revendications

1. Procédé pour faire transporter de manière coopérative une pièce de fabrication par une pluralité de robots de manutention mobiles, dans lequel chacun de la pluralité de robots de manutention mobiles comprend un point d'extrémité utilisateur pour une communication sans fil, chaque point d'extrémité utilisateur étant un équipement utilisateur de cinquième génération ou 5G, le procédé incluant les étapes constituées par :
- le regroupement de la pluralité de robots de manutention mobiles autour de la pièce de fabrication, l'initiation d'une communication sans fil directe entre les points d'extrémité utilisateur, la communication sans fil directe étant initiée par une communication de cinquième génération ou 5G directe et la communication sans fil directe étant une communication sans fil directe non assistée qui inclut une coordination de ressources entre des points d'extrémité utilisateur de la pluralité de robots de manutention mobiles ;
- l'instauration d'un domaine d'horloge de travail, effectuée par un réseau sensible au temps, entre les points d'extrémité utilisateur pour établir une synchronisation temporelle et une communication déterministe périodique entre les points d'extrémité utilisateur ; et
- le transport de la pièce de fabrication par la pluralité de robots de manutention mobiles pendant l'échange de messages de commande de contrôle et de messages de rétroaction de contrôle entre les points d'extrémité utilisateur ;
dans lequel un contrôle réparti est effectué par les robots de manutention mobiles.

2. Procédé selon la revendication 1, dans lequel la communication sans fil directe est une ou plusieurs communication(s) parmi une communication D2D, une communication ProSe et une communication en liaison latérale.

3. Procédé selon l'une quelconque des revendications précédentes, dans lequel seulement les points d'extrémité utilisateur habilités sont autorisés à participer à la communication sans fil directe.

4. Procédé selon l'une quelconque des revendications précédentes, dans lequel l'un de la pluralité de robots de manutention mobiles assume une fonctionnalité de contrôleur et ledit un de la pluralité de robots de manutention mobiles est en train de contrôler d'autres robots de manutention mobiles en train de collaborer.

5. Procédé selon l'une quelconque des revendications précédentes, dans lequel la communication sans fil directe entre les points d'extrémité utilisateur est une communication sans fil directe assistée qui inclut une coordination de ressources par une station de base.

6. Procédé selon la revendication 5, dans lequel la coordination de ressources est transférée d'une première station de base à une seconde station de base.

7. Procédé selon la revendication 6, dans lequel la seconde station de base est une station de base d'un réseau mobile public.

8. Procédé selon la revendication 4, dans lequel les points d'extrémité utilisateur des robots de manutention mobiles instaurent des services de communication entre ledit robot de manutention mobile qui assume une fonctionnalité de contrôleur et les robots de manutention mobiles en train de collaborer.

9. Procédé selon la revendication 4, dans lequel les points d'extrémité utilisateur des robots de manutention mobiles instaurent des services de communication entre la pluralité de robots de manutention mobiles.

10. Procédé selon l'une quelconque des revendications précédentes, dans lequel un point d'extrémité utilisateur qui appartient à un robot de manutention mobile intermédiaire relaie de façon bidirectionnelle des messages de commande de contrôle et des messages de rétroaction de contrôle entre des robots de manutention mobiles distants.
